# EUROPÄISCHE PATENTSCHRIFT

(11) **EP 1 690 743 B1**
(45) Veröffentlichungstag und Bekanntmachung des Hinweises auf die Patenterteilung: **23.01.2008**
(21) Anmeldenummer: 05025619.7
(22) Anmeldetag: 24.11.2005
(51) Int. Cl.: B60R 13/08

(54) **Abschirmteil, insbesondere Hitzeschild**
Shielding element, in particular heat shield
Ecran de protection, notamment écran thermique

(30) Priorität: 11.02.2005 DE 102005006320
(43) Veröffentlichungstag der Anmeldung: 16.08.2006
(60) Teilanmeldung: 07021966.2
(73) Patentinhaber: ElringKlinger AG, 72581 Dettingen (DE)
(72) Erfinder: Ell, Bernd, 90613 Grosshabersdorf (DE)
(74) Vertreter: Bartels & Partner

(56) Entgegenhaltungen:
- EP-A- 0 213 322
- DE-A1- 4 343 970
- GB-A- 2 319 501

## Beschreibung

Die Erfindung betrifft ein Abschirmteil, in Form eines Hitzeschildes, mit mindestens zwei Schildteilen, die über eine Verbindungseinrichtung lösbar miteinander verbindbar sind gemäß der Merkmalsausgestaltung des Oberbegriffes des Patentanspruches 1.

Während die Wärmeentwicklung, beispielsweise eines sparsamen leistungsoptimierten Dieselmotors, am Zylinderkurbelwellengehäuse sehr gering sein kann, gilt das für "heiße Zonen", wie bei Krümmer, Turbolader, Katalysator etc., keineswegs. Durch die immer kompaktere Konstruktion der Motoren geraten zunehmend Komponenten in enge Nachbarschaft, die thermisch nicht "kompatibel" sind. Demgemäß ist es notwendig, mit sog. Abschirmteilen, wie Hitzeschildern, thermische Motorenkomponenten gegenüber angrenzenden wärmeempfindlichen Aggregaten, wie Sensoren, Kraftstoffleitungen, Druckdosen, Karosserieteilen etc., zu schützen. Die Situation wird durch den Kompaktbau auch insofern verschärft, dass die hohe Packungsdichte der Aggregate den kühlenden Luftstrom im Motorraum einengt. Auch Lärmschutzmaßnahmen können dazu mit beitragen. So können beispielsweise Kunststoffbodenplatten, die den Schallaustritt vom Motorraum zur Fahrbahn vermindern sollen, unter Umständen eine wirkungsvolle Isolation erzeugen, mit der Wärme im Motorraum eingeschlossen wird. Katalysatoren zählen wegen ihrer phasenweisen hohen Oberflächentemperatur zu den Hitzequellen, die den Einsatz von schützenden Schildbarrieren jedenfalls erforderlich machen können. Ein typisches Beispiel hierfür sind konstruktive Maßnahmen, wie die Positionierung des Katalysators dicht am Krümmer. Dieses Bauprinzip, das der schnellen Aufheizung des Katalysators und damit der Emissionsminderung in der Kaltstartphase dient, verlegt eine starke Hitzequelle in den Motorraum, wo sich zahlreiche Aggregate auf engem Raum drängen. Ebenfalls eine Ursache für die wachsende Bedeutung von Abschirmteilen, wie Hitzeschildern, ist der Trend zum Einsatz von Thermoplasten. Die hervorragend formbaren, leichten und wirtschaftlichen Werkstoffe setzen sich im Motorraum zusehends durch, erfordern aber ein besonderes Augenmerk im Hinblick auf die Umgebungstemperaturen am Einsatzort bezogen auf sonstige thermische Motorenteile (Neue Werkstoffe und Entwicklungs-Tools für den Hitzeschutz in MTZ 12/2001, Jahrg.62, Seite 1044ff).

Durch die DE 102 47 641 B3 ist ein gattungsgemäßes Strukturbauteil bekannt, insbesondere in Form eines schalldämpfenden Abschirmteils, als Bauteil eines Kraftfahrzeuges. Um bei der bekannten Lösung die Schalldämmung zu verbessern, besteht das dahingehende Abschirmteil aus einem Schirmkörper mit einem Basisrand als Strukturteil einer ersten Art, das randseitig über winkelförmige Bügelschenkel innerhalb des Motorraumes an dortigen feststehenden Teilen festlegbar ist, und thermische Motorenkomponenten gegenüber wärmeempfindlichen Baukomponenten abschirmt.

Der Schirmkörper als Strukturteil ist in einem Mittenbereich U-förmig gewölbt und im übrigen dahingehend symmetrisch aufgebaut. Der U-förmig gewölbte Mittenbereich geht randseitig in Randbereiche stärkerer Krümmung über, wobei an den beiden einander gegenüberliegenden Randbereichen die winkelförmigen Bügel als Festlegemittel nachträglich angebracht sind. Der Schirmkörper besteht aus zwei Metallblechlagen, zwischen denen sich eine schalldämmende und/oder wärmende Dämmschicht erstreckt, und zum Festlegen der Blechdecklagen aneinander dient eine Bördelung, bei der der freie Bördelrand der einen Decklage den Randbereich der anderen Decklage flächig umfaßt. Um Gewicht zu sparen, kann der Schirmkörper aus Aluminium oder aus einem sonstigen Leichtmetall aufgebaut sein.

Die bekannte Lösung dient vorzugsweise der Abschirmung einer Kupplung zwischen einem Getriebeflansch und einer Kardanwelle vor vom Getriebe kommenden Körperschall sowie einer dauerhaften Beeinflussung durch Temperaturstrahlung eines benachbart verlaufenden Abgasrohres. Bei Versuchen wurde eine Verringerung der Schallemission bei der bekannten Lösung um 3dB erreicht. Sind bei der bekannten Lösung Wartungs- oder Reparaturarbeiten an der Kupplung oder der genannten Kardanwelle notwendig, ist regelmäßig das Abschirmteil in Form des Hitzeschildes abzubauen; im vorliegenden Fall dadurch, dass man den Schirmkörper durch Lösen einer Verbindungseinrichtung in Form von Schrauben von den winkelförmigen Bügeln als Festlegemittel trennt. Die dahingehende Demontage ist zeitaufwendig und erhöht dergestalt die Wartungs- und Reparaturkosten. Will man im Rahmen einer Wartung nur optisch die abgeschirmten Teile prüfen, ist regelmäßig in Abhängigkeit der Einbauverhältnisse gleichfalls eine vollständige Demontage des Schirmkörpers an Motorenbaukomponenten oder Chassisteilen notwendig.

Zwar sind im Stand der Technik als Verbindungseinrichtung auch sog. Federklammern beschrieben, um Abschirmteile miteinander lösbar zu verbinden oder solche an Motorenbaukomponenten oder Chassisteilen eines Fahrzeuges reversibel festzulegen und um dergestalt von der zeitaufwendigen Schraubverbindungstechnik wegzukommen; allein die dahingehenden Federklammern sind häufig aufwendig und teuer in der Herstellung und können insbesondere bei der Demontage dahingehender Abschirmteile sich derart mit ihren Klammerbügeln aufspreizen, dass die federelastische Wirkung weitgehend verloren geht, was diese für einen erneuten Festlegevorgang unbrauchbar werden läßt. Auch sind diese als zusätzliche Montageteile zu handhaben und zu bevorraten.

Durch die DE 43 43 970 A1 ist ein schalldämmender Belag als modular aufgebautes Mehrschichten-System bekannt bestehend aus einer Teppichschicht sowie einer Koppelteilschicht für Auskleidungsmodule unter Einbezug zusätzlicher weiterer Schichten, wie Schaum- oder Vliesmaterial. Die übereinander liegenden Modulschichten sind vorzugsweise über wieder lösbare Verbindungen verschiedener Ausführungsformen miteinander gekoppelt unter Einbezug von Druckknopfverbindungssystemen, die dergestalt den gestiegenen Anforderungen an die Recyclingfähigkeit Rechnung tragen. Dieser bekannte Modulaufbau, bestehend aus mehreren übereinander liegenden Schichten, die unter Bildung eines starren Verbundes miteinander gekoppelt sind, ist für den Einsatz als Hitzeschild nicht tauglich.

Durch die gattungsbildende GB-A-2 319 501 ist ein Abschirmteil bekannt, das als Akustik-Abschirmteil zwischen dem Motor und den Rädern eines Fahrzeuges angeordnet ist und das insoweit aus einem Material besteht, das eine hohe akustische Impedanz gewährleistet. Die bekannte Akustikschirmlösung besteht aus zwei Schildteilen, die bevorzugt aus Gummi oder einem thermoplastischen Material bestehen, die zur Verbindung aneinander angeformt sind. Bei einer alternativen Ausführungsform ist die bekannte Schildlösung auch einstückig ausgebildet und mit entsprechenden Führungsschlitzen zum Festlegen des Schildes an Drittteilen versehen. Die dahingehend starr aufgebaute Schildlösung ist wiederum als Hitzeschild bei Fahrzeugen nicht einsetzbar.

Ausgehend von diesem Stand der Technik stellt sich daher die Erfindung die Aufgabe, ein Abschirmteil der genannten Art als Hitzeschild unter Beibehalten seiner Vorteile, nämlich eine sehr gute Schall- und Wärmeisolation sicherzustellen, dahingehend weiter zu verbessern, dass zumindest Teile von ihm sich auch bei lang andauerndem Gebrauch funktionssicher montieren und demontieren lassen und dass der Kostenaufwand für eine dahingehende Lösung reduziert ist. Ferner soll mit der erfindungsgemäßen Lösung die Flexibilität für den Einbau im Fahrzeug erhöht werden. Eine dahingehende Aufgabe löst ein als Hitzeschild konzipiertes Abschirmteil mit den Merkmalen des Patentanspruches 1 in seiner Gesamtheit.

Dadurch, dass gemäß dem kennzeichnenden Teil des Patentanspruches 1 die Verbindungseinrichtung aus mindestens einem Druckknopf besteht, dessen Kugelteil mit dem einen und dessen Ösenteil mit dem anderen Schildteil verbunden ist und dass das andere Schildteil flexibel ist, lassen sich mit geringen Betätigungskräften von Hand und funktionssicher die jeweiligen Schildteile voneinander trennen und wieder miteinander verbinden. Druckknopfverbindungen an sich sind beispielsweise aus der Textilindustrie bekannt (DE 36 44 690 C1, DE 198 24 943 A1) und dienen dort dazu, Bekleidungsteile, beispielsweise zum Schließen einer Mantelöffnung od. dgl., lösbar miteinander zu verbinden. Dahingehende Druckknopf-Verbindungseinrichtungen sind auch noch nach einer Vielzahl von Öffnungs- und Schließvorgängen funktionssicher handhabbar und stellen dergestalt wirksam eine form- und kraftschlüssige Verbindung her. Ferner lassen sich Druckknöpfe ohne weitere Zusatzteile oder besondere Montagevorrichtungen an Produkten, auch in Form von Schildteilen, festlegen und verbleiben dort unverlierbar, was ein Vorteil ist beispielsweise gegenüber den genannten Federklammerlösungen, die als eigenständiges Bauteil zu den Schildteilen mitzuliefern und vor Montageeinsatz zu bevorraten sind.

Mit nur einem Betätigungsschritt läßt sich von Hand die Druckknopfverbindung herstellen und wieder lösen, wobei die abgerundeten Druckknopfteile (Kugelteil und Ösenteil) einer möglichen Verletzungsgefahr, wie sie gegebenenfalls durch scharfkantige Klammerteile gegeben sein kann, entgegenwirken. Sofern der jeweilige Druckknopf aus Metall besteht, ist er thermisch beständig und kann demgemäß auch bei Hitzeschildern Anwendung finden. Durch einfaches Abknöpfen des einen Schildteils vom jeweils anderen über die Druckknopf-Verbindungseinrichtung lassen sich wartungsintensive Motoren- und Maschinenbereiche freilegen, so dass dergestalt der zeitliche Wartungs- und Reparaturaufwand reduzierbar ist. Auch lassen sich dergestalt durch Entfernen eines Schildteils über die Druckknopf-Verbindungseinrichtung Schmierstellen am Motor oder an der Maschine bedienen, was ansonsten bei den bekannten Lösungen zu erheblichen Abbauarbeiten für das jeweilige Schildteil führt. Als besonders vorteilhaft hat es sich dabei erwiesen, ein Schildteil an der jeweiligen Stelle, die nicht zugänglich zu sein braucht, zu belassen und von diesem das andere Schildteil mittels der Druckknopf-Verbindungseinrichtung leicht lösbar zu gestalten.

Ferner ist erfindungsgemäß vorgesehen, dass eines der Schildteile flexibel ausgestaltet ist, was es ermöglicht, dass dieses Schildteil sich an eine Vielzahl von Geometrien bezogen auf die Gestalt von Motoren- und Maschinenkomponenten sowie Chassisbauteilen anpassen läßt, was insgesamt die Flexibilität für den gewünschten Einbau erhöht. Insbesondere kann sich das flexible Schildteil auch an vibrierende Bauteile anlegen und dämpft dergestalt wirksam den Körperschall, was ein vergleichbares ausschließlich starres Schildteil, wie durch die bekannten Hitzeschildlösungen aufgezeigt, dergestalt nicht leisten kann.

Bei einer bevorzugten Ausführungsform des erfindungsgemäßen Abschirmteils ist vorgesehen, dass in zumindest dem Bereich der Befestigung des Kugel- oder des Ösenteils an zumindest einem Schildteil eine Markierung insbesondere farblicher Art vorhanden ist. Aufgrund der genannten Markierung, beispielsweise in Form einer farblichen Kennzeichnung im Druckknopfbereich, läßt sich dergestalt eine eindeutige Zuordnung von korrespondierenden aneinander festzulegenden Schildteilen erreichen, was sich insbesondere bei Produktionslinien von Kraftfahrzeugen als günstig erweist, wo auf einer Produktionslinie unterschiedliche Fahrzeugvarianten aufgebaut und gegebenenfalls mit unterschiedlichen Abschirmteilen zu versehen sind.

Im folgenden wird das erfindungsgemäße Abschirmteil anhand eines Ausführungsbeispiels nach der Zeichnung näher erläutert.

Dabei zeigen in prinzipieller und nicht maßstäblicher Darstellung die
- Fig.1: eine perspektivische Vorderansicht auf das Abschirmteil, im wesentlichen bestehend aus zwei einzelnen miteinander verbundenen Schildteilen;
- Fig.2: eine der Fig. 1 entsprechende Darstellung der beiden Schildteile vor Verbinden mittels einer Druckknopf-Verbindungseinrichtung.

Das erfindungsgemäße Abschirmteil läßt sich insbesondere als sog. Hitzeschild einsetzen und weist zwei einzelne Schildteile 10,12 auf, die sich über eine als Ganzes mit 14 bezeichnete Verbindungseinrichtung lösbar miteinander verbinden lassen. Die Verbindungseinrichtung 14 weist zwei in Reihe übereinander angeordnete Druckknöpfe 16 auf, wobei die beiden Druckknöpfe 16 mit ihrem jeweiligen Kugelteil 18 eine plattenförmige stegartige Verlängerung 20 des einen Schildteils 10 durchgreifen und insoweit eine Angriffsmöglichkeit bieten für das korrespondierende Ösenteil 22 im weiteren Schildteil 12. Dahingehende Druckknöpfe 16 sind im Stand der Technik, insbesondere in der Bekleidungsindustrie, in einer Vielzahl von Ausführungsformen beschrieben, so dass an dieser Stelle auf die dahingehend bekannte Verbindungslösung nicht mehr näher eingegangen wird.

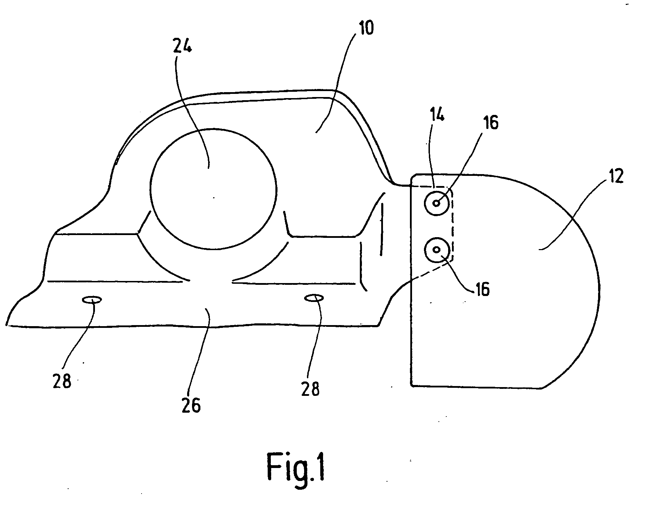

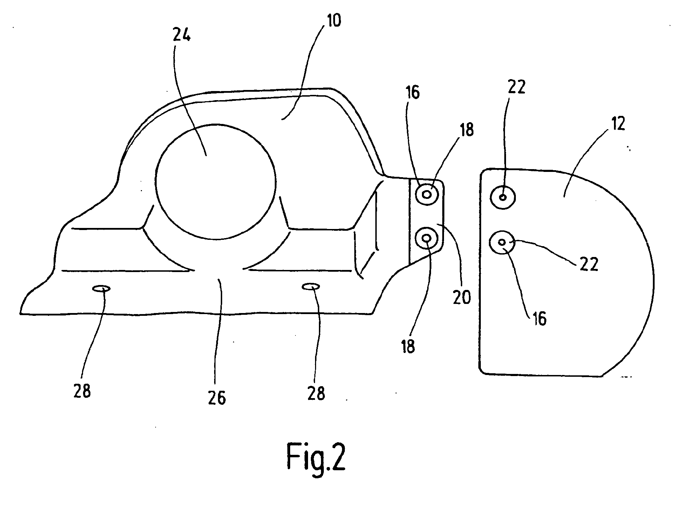

Die Ösenteile 22 weisen jedenfalls benachbart zueinander dergestalt einen Abstand auf, dass sie bei eben ausgerichtetem Schildteil 12 mit ihren Ösenöffnungen auf die vorstehenden Kugelteile 18 der Druckknöpfe 16 im ersten Schildteil 10 verrastend aufsetzbar sind. Hierzu ist in Blickrichtung auf die Fig.2 gesehen das zweite Schildteil 12 auf das erste Schildteil 10 entlang der stegartigen Verlängerung 20 aufzulegen und die beiden Druckknöpfe 16 sind dann von Hand miteinander zu verrasten, so dass sich der Verbund und mithin das Abschirmteil gemäß der Darstellung nach der Fig.1 ergibt. Sofern die Darstellung nach den Fig.1 und 2 angesprochen ist, ist das jeweilige Ösenteil 22 mit seiner rückwärtigen Ansicht gezeichnet und die Öffnung für das zuordenbare Kugelteil 18 liegt auf der gegenüberliegenden Seite und ist dergestalt nicht näher dargestellt.

Das erste Schildteil 10 besteht bei dem vorliegenden Ausführungsbeispiel eines Abschirmteils aus einem einlagigen Blechformteil, das eine augenförmige Mittenausnehmung 24 aufweist, wobei in Blickrichtung auf die Fig.1 gesehen nach unten hin einstückig sich eine kastenförmige Verbreiterung anschließt mit einem Auflageteil 26, das von zwei Bohrungen 28 durchgriffen ist, das dem Festlegen des Abschirmteils an einem nicht näher dargestellten Fahrzeugteil, beispielsweise in Form eines Achsschenkels od. dgl., dient.

In Blickrichtung auf die Fig. 1 gesehen rechts davon schließt sich dann an das erste Schildteil 10 das zweite Schildteil 12 an, das gemäß der Darstellung nach den Fig.1 über die Verbindungseinrichtung 14 lösbar mit dem ersten Schildteil 10 verbunden ist und in Blickrichtung auf die Fig.2 gesehen ist die dahingehende Verbindung gelöst dargestellt und das zweite Schildteil 12 vom ersten Schildteil 10 entfernt. Anstelle eines einlagigen Blechumformteils kann das eine Schildteil 10 auch mehrlagig ausgebildet sein, beispielsweise zwischen Blechdecklagen eine wärme- und schallisolierende Dämmung (nicht näher dargestellt) aufweisen. Ist die dahingehende Dämmung in Verlängerung bis zum Steg 20 herausgeführt, müßte insoweit das Kugelteil 18 nicht nur die jeweilige Blechlage des Schildteils 10 durchgreifen, sondern dergestalt auch die angesprochene Dämmung. Bei der gezeigten Ausführungsform ist das andere Schildteil 12 flexibel ausgebildet und weist insbesondere einen mattenartigen Aufbau auf, der zumindest teilweise aus einem Kunststoffgewebe gebildet ist, das vorzugsweise wärme- und/oder hitzebeständige Eigenschaften aufweist.

Demgemäß besteht das Kunststoffgewebe aus hitzebeständigen Fasern, wie Aramidfasern, Kohlefasern oder Mineralfasern, wobei die dahingehenden Fasern auch zumindest teilweise durch entsprechende Fäden aus denselben Werkstoffen ersetzt sein können. Das angesprochene - auch mehrlagige - Gewebe kann aus Kett- und Schußfäden gebildet sein oder ist in der Art eines Geleges oder Laminats aufgebaut. In jedem Fall läßt sich das angesprochene Kunststoffgewebe oder -gelege mit metallischen Anteilen versehen, beispielsweise indem man hitzeresistente Metallwerkstoffe durch Beschichten aufbringt, wofür sich insbesondere Sprüh- und Rakelverfahren eignen.

Bei dem in den Figuren gezeigten Ausführungsbeispiel ist das zweite Schildteil 12 an seiner dem ersten Schildteil 10 abgewandten Seite mit einem halbkreisförmigen Abschlußbogen versehen und im übrigen ist das Schildteil 12 als ebener Zuschnitt ausgewählt, um derart in der Art einer lösbaren Abdeckklappe bei montierem ersten Schildteil 10 die Zugänglichkeit von Motoren- oder Maschinenteilen auch im Bereich des Achsschenkels zu gewährleisten, um dergestalt Wartungs- und Inspektionsarbeiten einschließlich eines Schmierdienstes zu erleichtern. Da das Schildteil 12 als eben verlaufender Flächenzuschnitt sehr flexibel ist, läßt sich das Schildteil 12 insbesondere bei geometrisch größerer Ausdehnung von Hand von einer interessierenden Stelle auch wegklappen, ohne dass gleich die Druckknopf-Verbindungseinrichtung zu lösen wäre. Bei dem gezeigten Ausführungsbeispiel wird allerdings durch Lösen des jeweiligen Druckknopfes 16 die beschriebene Zugänglichkeit hergestellt, indem man das zweite Schildteil 12 vom ersten Schildteil 10, wie angegeben, entfernt.

Aufgrund des speziellen Faser- oder Fadenaufbaues des zweiten Schildteils 12 ist dieses gering wärmeleitend ausgebildet, so dass unmittelbar oder nach einer kurzen Abkühlzeit eine Betätigung von Hand möglich ist. Neben einem eben verlaufenden Flächenzuschnitt für das Schildteil 12 kann dieses auch in Abhängigkeit der gewählten Gewebe- oder Gelegeform von seiner geometrischen Ausbildung her sehr frei gestaltet werden, so dass sich dergestalt platzsparend auch geometrisch kompliziert geformte Motoren- und Maschinenteile sich sicher über das Schildteil 12 schützend abdecken lassen. Auch kann das zweite Schildteil 12 vergleichbar dem ersten Schildteil 10 aus einem Umformteil bestehen (nicht dargestellt). Bei der Auswahl der hitzebeständigen flexiblen Materialien hat sich ein Aufbau des zweiten Schildteils 12 als Glasfasermatte als besonders vorteilhaft bei praktischen Versuchen erwiesen.

Insbesondere im Bereich der stegartigen Verlängerung 20 kann das erste Schildteil 10 eine Markierung, insbesondere in Form einer farblichen Kennzeichnung (nicht dargestellt), aufweisen, die eine verbesserte Zuordenbarkeit von unterschiedlich konzipierten weiteren Schildteilen ermöglicht, wobei bei der Verwendung gleicher Markierungen, insbesondere in Form farblicher Kennzeichnungen sowohl beim Abschirmteil 10 als auch beim Schildteil 12, sich paarweise Gruppen zum Festlegen erkennen lassen, was insbesondere in Produktionslinien bei der Kraftfahrzeugherstellung eine Erleichterung darstellen kann. Des weiteren kann das Schildteil 10 eine nicht näher dargestellte Oberflächenstrukturierung aufweisen, um aufgrund der hierdurch erreichbaren, vergrößerten Oberfläche eine verbesserte Wärmeabgabe zu erreichen.

Mit der erfindungsgemäßen Verbindungseinrichtung 14 ist eine beliebig oft lösbare Verbindungstechnik erreicht, die keine Zusatzteile oder sonstigen Montagevorrichtungen vor Ort, beispielsweise an der genannten Produktionslinie von Fahrzeugen, benötigt. Dergestalt läßt sich die Anzahl der Anbauteile des Lieferumfanges niedrig halten sowie die Anzahl der benötigten Produktionsarbeitsschritte.

## Patentansprüche

1. Abschirmteil, in Form eines Hitzeschildes, mit mindestens zwei Schildteilen (10,12), die über eine Verbindungseinrichtung (14) lösbar miteinander verbindbar sind und von denen mindestens ein Schildteil (10) starr ausgebildet ist, **dadurch gekennzeichnet, dass** die Verbindungseinrichtung (14) aus mindestens einem Druckknopf besteht, dessen Kugelteil (18) mit dem einen (10) und dessen Ösenteil (22) mit dem anderen Schildteil verbunden ist, und dass das andere Schildteil (12) flexibel ist.

2. Abschirmteil nach Anspruch 1, **dadurch gekennzeichnet, dass** das flexible Schildteil (12) einen mattenartigen Aufbau hat und insbesondere, zumindest teilweise, aus einem Kunststoffgewebe besteht.

3. Abschirmteil nach Anspruch 2, **dadurch gekennzeichnet, dass** das Kunststoffgewebe hitzebeständig ist, insbesondere aus Aramidfasern und/oder -fäden, Kohlefasern und/oder -fäden sowie Mineralfasern und/oder -fäden besteht.

4. Abschirmteil nach einem der Ansprüche 1 bis 3, **dadurch gekennzeichnet, dass** das eine Schildteil (10) aus einem Blechformteil besteht und das andere Schildteil (12) aus einem eben verlaufenden Flächenzuschnitt.

5. Abschirmteil nach einem der Ansprüche 1 bis 4, **dadurch gekennzeichnet, dass** das jeweilige Kugelteil (18) des Druckknopfes (16) das starre eine Schildteil (10) durchgreift und dass das Ösenteil (22) des Druckknopfes (16) am flexiblen Schildteil (12) angeordnet ist.

6. Abschirmteil nach einem der Ansprüche 1 bis 5, **dadurch gekennzeichnet, dass** in Reihenanordnung mindestens zwei Druckknöpfe (16) in Folge die Verbindungseinrichtung (14) bilden.

7. Abschirmteil nach einem der Ansprüche 1 bis 6, **dadurch gekennzeichnet, dass** zumindest im Bereich der Befestigung des Kugelteils (18) oder des Ösenteils (22) an zumindest einem Schildteil (10,12) eine Markierung, insbesondere farblicher Art, vorhanden ist.

## Claims

1. Shielding part in the form of a heat shield, with at least two shield parts (10, 12) that can be disconnectably connected with each other by means of a connection means (14), of which at least one shield part (10) is rigidly designed, **characterised in that** the connection means (14) consists of at least one press stud, the spherical part (18) of which is connected with one (10), and the eye part (22) of which is connected with the other shield part (12), and **in that** the other shield part (12) is flexible.

2. Shielding part according to Claim 1, **characterised in that** the flexible shield part (12) comprises a mat-like construction, and in particular consists of a plastic material at least in part.

3. Shielding part according to Claim 2, **characterised in that** the plastic mesh is heat resistant, and in particular consists of aramide fibres and/or threads, carbon fibres and/or threads, and mineral fibres and/or threads.

4. Shielding part according to one of the Claims 1 to 3, **characterised in that** one shield part (10) consists of a shaped sheet metal part, and the other shield part (12) of a level spatial expansion.

5. Shielding part according to one of the Claims 1 to 4, **characterised in that** the relevant spherical part (18) of the press stud (16) engages one shield part (10), and **in that** the eye part (22) of the press stud (16) is located in the flexible shield part (12).

6. Shielding part according to one of the Claims 1 to 5, **characterised in that** at least two press studs (16) arranged in series in the form of a row form the connection means (14).

7. Shielding part according to one of the Claims 1 to 6, **characterised in that** a marker, in particular in the form of a coloured marking, is present at least in the area where the spherical part (18) or the eye part (22) is fitted to a shield part (10, 12).

## Revendications

1. Écran, sous forme d'un bouclier thermique, comportant au moins deux parties d'écran (10, 12) qui peuvent être reliées l'une à l'autre de manière amovible par un dispositif de liaison (14) et dont au moins une partie d'écran (10) est rigide, **caractérisé en ce que** le dispositif de liaison (14) est constitué d'au moins un bouton pression dont la partie sphérique (18) est reliée à l'une des parties d'écran (10) et dont la pièce en oeillet (22) est reliée à l'autre partie d'écran et **en ce que** l'autre partie d'écran (12) est flexible.

2. Écran selon la revendication 1, **caractérisé en ce que** la partie d'écran flexible (12) a une structure en natte et est, en particulier, au moins en partie une étoffe en matière plastique.

3. Écran selon la revendication 2, **caractérisé en ce que** l'étoffe en matière plastique résiste à la chaleur, est en particulier constitué de fibres et/ou de fils d'aramide, de fibres et/ou de fils de carbone, ainsi que de fibres ou de fils minéraux.

4. Écran selon l'une des revendications 1 à 3, **caractérisé en ce que** l'une des parties d'écran (10) est une pièce usinée en tôle et l'autre partie d'écran (12) est un flan plat s'étendant dans un plan.

5. Écran selon l'une des revendications 1 à 4, **caractérisé en ce que** chaque partie sphérique (18) du bouton pression (16) traverse la partie d'écran (10) qui est rigide et **en ce que** la pièce en oeillet (22) du bouton pression (16) se trouve sur la partie d'écran (12) flexible.

6. Écran selon l'une des revendications 1 à 5, **caractérisé en ce qu'**au moins deux boutons pression (16) disposés en rangée forment en se suivant le dispositif de liaison (14).

7. Écran selon l'une des revendications 1 à 6, **caractérisé en ce qu'**une marque, en particulier colorée, se trouve au moins dans la zone où la partie sphérique (18) ou la pièce en oeillet (22) est fixée à au moins une partie d'écran (10, 12).
